# EUROPEAN PATENT SPECIFICATION

(11) **EP 2 445 145 B1**
(45) Date of publication and mention of the grant of the patent: **14.11.2018**
(21) Application number: 10811152.7
(22) Date of filing: 11.05.2010
(51) Int. Cl.: H04L 12/701, H04L 12/715

(54) **CONTROL ELEMENT, FORWARDING ELEMENT AND ROUTING METHOD FOR INTERNET PROTOCOL NETWORK**
STEUERELEMENT, WEITERLEITUNGSELEMENT UND LEITUNGSVERFAHREN FÜR EIN INTERNET-PROTOKOLL-NETZWERK
ÉLÉMENT DE COMMANDE, ÉLÉMENT DE TRANSFERT ET PROCÉDÉ DE ROUTAGE POUR UN RÉSEAU À PROTOCOLE INTERNET

(30) Priority: 28.08.2009 CN 200910092103
(43) Date of publication of application: 25.04.2012
(73) Proprietor: ZTE Corporation, Shenzhen, Guangdong 518057 (CN)
(72) Inventor: SONG, Xiaoli, Shenzhen City Guangdong Province, 518057 (CN)
(74) Representative: Novagraaf Technologies
(86) International application number: PCT/CN2010/072642
(87) International publication number: WO 2011/022992

(56) References cited:
- CN-A- 101 056 222
- CN-A- 101 350 781
- CN-A- 101 471 858
- CN-A- 101 488 946
- US-A1- 2006 092 976
- US-A1- 2006 233 101
- YANG INTEL CORP R DANTU UNIV OF NORTH TEXAS T ANDERSON INTEL CORP R GOPAL NOKIA L: "Forwarding and Control Element Separation (ForCES) Framework; rfc3746.txt", NETWORK WORKING GROUP RFC 1717, INTERNET SOCIETY (ISOC) 4, RUE DES FALAISES CH- 1205 GENEVA, SWITZERLAND, CH, 1 April 2004 (2004-04-01), XP015009526, ISSN: 0000-0003

## Description

### Technical Field

The present invention relates to IP (Internet Protocol) network technology field, and specifically to a control element, a forwarding element and a routing method for internet protocol network.

### Background of the Related Art

With the rapid development of the internet technology, IP network applies in commercial market on a broad scale, and the scale and user number of the commercial network develops steadily and rapidly.

With the introduction of more and more new services and new functions to the network, the control plane of the IP network becomes more and more complicated, the extensibility of the control plane, data plane and management plane becomes the main problem that needs to face during the IP network evolution.

The design defects in the architecture of the present IP network severely limit the capacity, extensibility, controllability, security and QoS (Quality of Service) etc. of the network. In the present IP network, the control plane and the data plane are integrated at an identical network node, therefore when more and more services and control signaling are added to the network node, the whole network will become particularly complicated and difficult to maintain and extend.

In order to solve the above problem, a concept of a separation of controlling and forwarding is proposed in the industry, i.e., separating the control plane from the data plane and maintaining them respectively, thereby reducing the pressure on the network extension and control ability and increasing the robustness of the network.

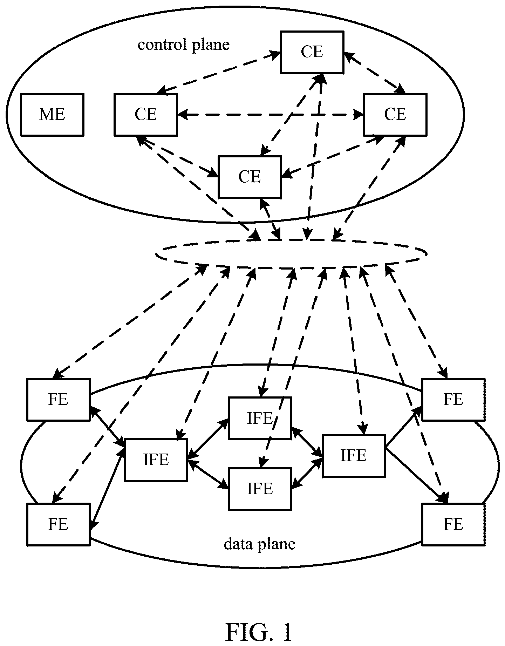

FIG. 1 is schematic diagram of the structure of the existing IP network with a separation of controlling and forwarding. The network shown in FIG. 1 is a network with a separation of the control plane and the data plane, wherein the control plane is composed of multiple Control Elements (CE), mainly used for controlling and managing the operation of all network protocols, including routing calculating, routing selecting, service processing, and so on; the data plane is composed of Forwarding Elements (FE) and Internal forwarding elements (IFE), mainly used for forwarding the service data.

The IP network additionally includes a management element (ME) used for managing a network entity such as CE and FE, the ME monitors and collects the static information, state information of each network element, and manages the each network element according to these information and configuration instruction.

FIG. 1 is schematic diagram of the structure of the existing IP network with a separation of controlling and forwarding. As shown in FIG. 1, the forwarding of the data in the data plane maybe implemented according to multiple routing schemes, for example, the data may be forwarded according to the routing information statically configured by the ME; and may be forwarded according to the routing information calculated by the CE (calculated according to the network information of the connection link between the FE and the IFE collected by the CE) .

However, the existing technology includes at least the following defects:
In the routing scheme of the data plane in the prior technology, the routing scheme can be obtained only by using the content below the layer 4 of the data packets, i.e. the network player information, this routing scheme has too much limitation and cannot satisfy the different requirements of the users, such as differentiated service requirement and security requirement.

The document US 2006/0233101 A1 discloses a method and apparatus for an application aware traffic shaping service node architecture. The service node architecture includes a set of one or more line cards, a set of one or more processor cards and a full mesh communication infrastructure coupling the sets of line and processor cards. Each link coupling the sets of line and processor cards is of equal capacity. A line card includes a physical interface and a set of one or policy network processors, with the network processors performing deep packet inspection on incoming traffic and shaping outgoing traffic. Processors cards include a set of one or more policy generating processors.

### Summary of the Invention

A control element, a forwarding element and a routing method for the internet protocol network according to independent claims are provided. Further improvements and embodiments are provided in the dependent claims.

Also provided is a control element, including: a strategy enacting module and a strategy distributing module; wherein,
the strategy enacting module is used to enacting a routing strategy according to the identification result reported by the forwarding element; wherein the identification result is the result obtained by a deep packet inspection for the data packets implemented by the forwarding element according to an identification rule;
the strategy distributingmodule is used to distribute the routing strategy to the forwarding element, so that the forwarding element forwards the data packets according to the routing strategy.

In the above control element, the identification result includes at least one of: user information, service information and data content information.

In the above control element, the strategy enacting module further includes: a strategy distributing module, a result receiving module, a strategy determining module; wherein,
the rule distributing module is used to distribute a packet identification rule to the forwarding element in its extent of the jurisdiction;
the result receiving module is used to receive the identification result reported by the forwarding element;
the strategy determining module is used to determine a routing strategy according the identification result, wherein the routing strategy includes routing forwarding information.

In the above control element, the identification result includes the information of layers 2-7 in an open system interconnection model.

Also provided is a forwarding element, including: a identification processing module, a forwarding processing module; wherein,
the identification processing module is used to implement a deep packet inspection for the data packets according to the packet identification rule distributed by the a control element, and obtain an identification result and report the identification result to the control element;
the forwarding processing module is used to forward the data packets according a routing strategy, wherein the routing strategy is determined and distributed by the control element according to the identification result.

In the above forwarding element, the identification result comprises at least one of: user information, service information and data content information.

In the above forwarding element, the identification processing module further comprises: a rule receiving module, a packet identifying module, a result reporting module; wherein,
the rule receiving module is used to receive the packet identification rule distributed by the control element;
the packet identifying module is used to implement the deep packet inspection for received data packets according to the packet identification rule, and obtain the identification result;
the result reporting module is used to report the identification result to the control element;

In the above forwarding element, the forwarding processing module further comprises: a strategy receiving module, a forwarding control module; wherein,
the strategy receiving module is used to receive the routing strategy determined and distributed by the control element according to the identification result;
the forwarding control module is used to forward the date packets according to the routing strategy.

Also provided is a routing
method for internet protocol network, including:
the forwarding element implementing a deep packet inspection for the data packets according to the packet identification rule distributed by a control element to obtain an identification result, and reporting the identification result to the control element;
the control element enacting a routing strategy according to the identification result;
the control element distributing the routing strategy to the forwarding element;
the forwarding element forwarding the data packets according to the routing strategy.

The above routing method for internet protocol network, wherein the identification result includes at least one of : user information, service information and data content information.

In the present invention, a deep packet inspection module is configured in the FE, when receiving the data packets, the deep packet inspecting module obtains the application player information of the data packets and reports the data packets to the CE, the CE calculates a routing strategy according to the application player information of the data packets, the FE thereby forwards the data packets according the routing strategy calculated by the CE, therefore, the routing may be performed not only based on the existing way, but also may be enacted correspondingly according to the result of the deep packet inspection, thereby providing routing schemes as many as possible and satisfying different requirements.

### Brief Description of Drawings

FIG. 1 is schematic diagram of the structure of the IP network with a separation of controlling and forwarding in the prior art;
FIG. 2 is schematic diagram of the structures of the CE and the FE and the connection relationship between them in the present invention;
FIG. 3 is flowchart of routing method for internet protocol network of the present invention;
FIG. 4 is flowchart of implementing a routing method for internet protocol network in the control plane of the present invention;
FIG. 5 is flowchart of implementing a routing method for internet protocol network in the forward plane of the present invention.

### Preferred Embodiments of the Present Invention

The basic scheme of the present invention is : the forwarding element implements a deep packet inspection for the data packets to obtain the identification result according to the packet identification rule distributed by the control element, and reports the result to the control element; the control element enacts a routing strategy according to the identification result; the control element distributes the routing strategy to the forwarding element; the forwarding element forwards the data packets according to the routing strategy.

The present invention will be further described by the drawings and specific embodiments.

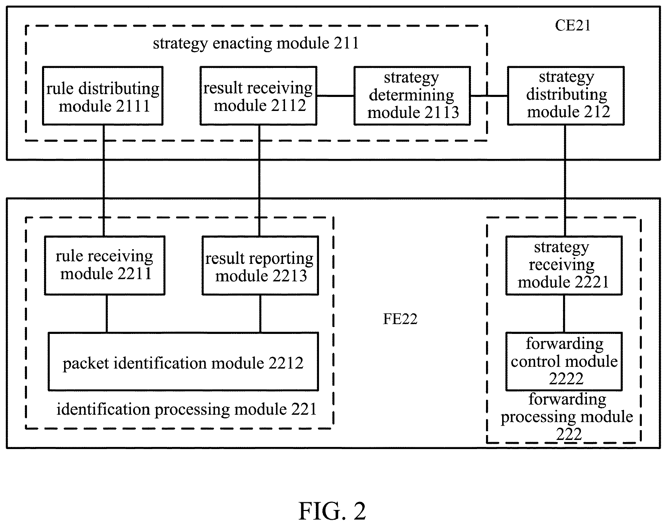

The present invention provides a control element and a forwarding element, FIG. 2 is schematic diagram of the structures of the CE and the FE and the connection relation between them of the present invention, as shown in FIG. 2, the CE 21 includes:
A strategy enacting module 211, used to enact a routing strategy according to the identification result reported by the FE 22; wherein the identification result is a result obtained by the FE 22 implementing the deep packet inspection for the data packets according to the identification rule;
A strategy distributing module 212, used to distribute the routing strategy to the FE 22, so that the FE 22 forwards the data packets according to the routing strategy;

Wherein the strategy enacting module 211 specifically includes:
A rule distributing module 2111, used to distribute a packet identification rule to the FE 22 in the extent of jurisdiction of the rule distributing module 2111;
A result receiving module 2112, used to receive the identification result reported by the FE 22, wherein the identification result is a result obtained by the FE 22 implementing the deep packet inspection for the received data packets according to the identification rule, the result includes the application player information of the data packets;
A strategy determining module 2113, used to determine a routing strategy according the identification result, the routing strategy includes routing forwarding information.

As shown in FIG. 2, the FE 22 includes:
A identification processing module 221, used to implement a deep packet inspection for the data packets according to the packet identification rule distributed by the CE 21, and obtain the identification result, and report the identification result to the CE 21;
A forwarding processing module 222, used to forward the data packets according the routing strategy, wherein the routing strategy is determined and distributed by the CE 21 according to the identification result.

Wherein the identification processing module 221 includes:
A rule receiving module 2211, used to receive the packet identification rule distributed by the CE 21;
A packet identifying module 2212, used to implement the deep packet inspection for received data packets according to the packet identification rule, and obtain the identification result including the application player information of the data packets;
A result reporting module 2213, used to report the identification result to the CE 21;
While the forwarding processing module 222 specifically includes:
   A strategy receiving module 2221, used to receive the routing strategy determined by the CE 21 according to the identification result;
   A forwarding control module 2222, used to forward the date packets according to the routing strategy.

The Internet protocol network in the present invention includes at least one controlling element, a plurality of forwarding elements, a plurality of inner forwarding elements, in which the CE and the FE have been described in detail above and do not need to be repeated herein.

The number of the control elements may be one or plural, when there are a plurality of control elements, the load sharing and/or the redundant back-up of the CE can be achieved.

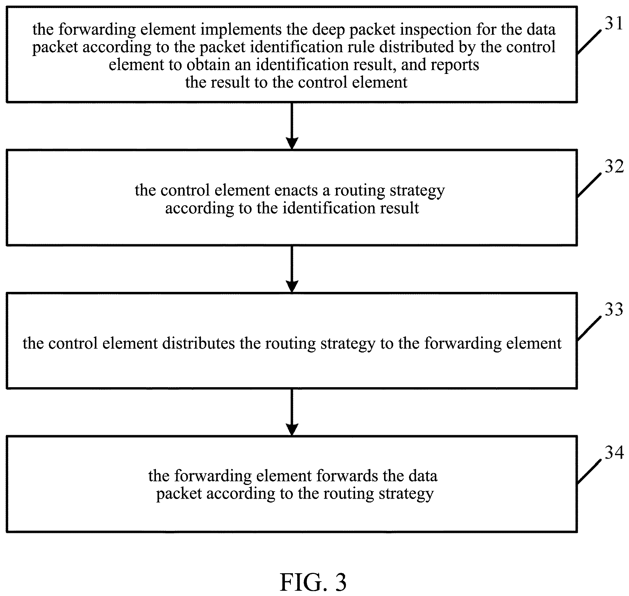

The present invention provides a routing method for Internet protocol network, the FIG. 3 is a flowchart of the routing method for Internet protocol network; as shown in FIG. 3, the method includes the following steps of:
Step 31, the forwarding element implements the deep packet inspection for the data packets according to the packet identification rule distributed by the CE to obtain an identification result, and reports the result to the CE;
Step 32, the CE enacts a routing strategy according to the identification result;
Step 33, the CE distributes the routing strategy to the FE;
Step 34, the FE forwards the data packets according to the routing strategy.

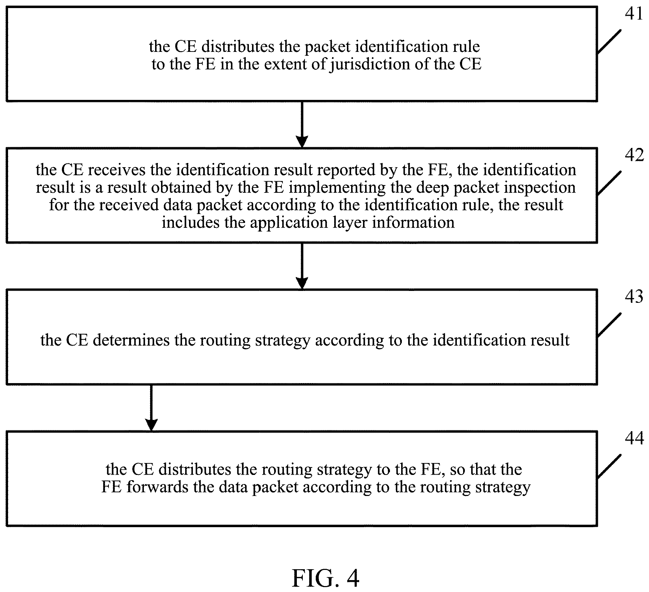

FIG. 4 is flowchart of realizing the routing method for Internet protocol network in the control plane of the present invention; as shown in FIG. 4, the method includes the following steps of:
Step 41, the CE distributes the packet identification rule to the FE in the extent of jurisdiction of the CE;
Step 42, the CE receives the identification result reported by the FE, the identification result is a result obtained by the FE implementing the deep packet inspection for the received data packets according to the identification rule, and the result includes the application layer information of the data packets;
Step 43, the CE determines the routing strategy according to the identification result;
Step 44, the CE distributes the routing strategy to the FE, so that the FE forwards the data packets according to the routing strategy.

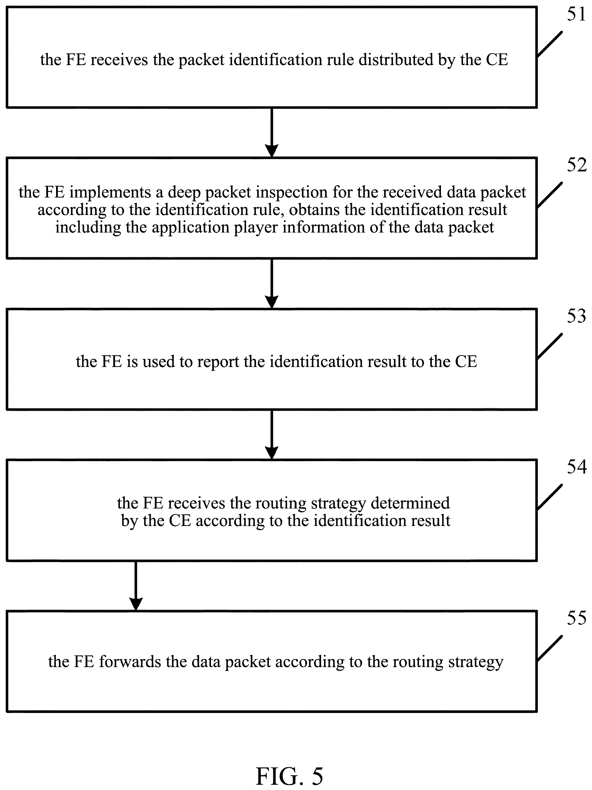

FIG. 5 is flowchart of implementing routing method for Internet protocol network in the forward plane of the present invention.
Step 51, the FE receives the packet identification rule distributed by the CE;
Step 52, the FE implements a deep packet inspection for the received data packets according to the identification rule, obtains the identification result including the application player information of the data packets;
Step 53, the FE is used to report the identification result to the CE;
Step 54, the FE receives the routing strategy determined by the CE according to the identification result;
Step 55, the FE forwards the data packets according to the routing strategy.

The IP network provided by the present invention is a network with separation of controlling and forwarding, and may also be FPBN (Future Packet Based Networks), while the CE may be a control device realized on the basis of iSCP (independent Scalable Control Plane) technology.

The description above is the description for the new additional part of the present invention, additionally, the CE of the present invention includes the calculating module for other routing strategy, which are described respectively as bellow.

The CE of the present invention further includes:
A routing calculating module, used to calculate the routing according to the network information of the connected link reported by the FE;
A strategy module, used to execute the routing related strategy decision (from ME), operate the routing protocol, calculate and maintain the routing table RIB (Routing Information Base), send adjacency list and Forwarding Information Base including the next hop information to the data plane;
The routings from various routing protocols such as OSPF, BGP are recorded in the routing table RIB, while the FIB is an information table constituted by the optimal routing selected from the RIB accompanied with the related forwarding information such as next hop address, egress interface information.

While the FE updates the FIB saved in itself according to the FIB, and realizing the forwarding of the data packets by looking up the next hop information according to the FIB, all of the FEs and the IFEs which need packet forwarding function need to save the FIB table.

While the FE further includes:
A redirecting module, wherein the FE separates the packets related to the routing protocol from the data packets and redirects the packets to the CE;
An information reporting module, used to report the network information of the connected link to the CE for the routing calculation.

In the specifically embodiments of the present invention, requirements are satisfied as many as possible, mainly by configuring the packet identifying module in the FE, and obtaining the content between the layers 2-7 of the date packets using the deep packet inspection technology, and determining a corresponding routing strategy based on the information between the layers 2-7 of the data packets.

The present invention will be described in detail by different embodiments as bellow.

### The first embodiment of the present invention:

The present P2P services (such as BT service, Emule service and so on), may occupy considerable bandwidth resources, and may cause the other user can not obtain normal service, for this situation, the present IP network are not able to execute a pointed routing strategy calculation, the embodiment of the present invention may configure a corresponding strategy for this P2P service, the processing procedure will be described in detail by taking the BT service as an example.

The CE presets a packet identification rule, for example, the packet including a BT attribute word (19BitTorrent Protocol) in layers 2-7 of the date packets is a data packet of the P2P service;

For example, for the identification of the Bittorrent protocol, its peer protocol is analyzed by means of reverse engineering, the peer protocol refers to the protocol for exchanging information between Peer and Peer. The peer protocol starts with a handshaking, followed by a circular message stream, in front of which is a number used for indicating the length of the message, for example, during the handshaking, 19 is sent at first, followed by a string "BitTorrent protocol", so the "19BitTorrent Protocol" is attribute word of the Bittorrent.

The rule distributing module in the CE distributes the packet identification rule to the FE;
The rule receiving module of the FE receives and saves the packet identification rule, when receiving the data packets, the packet identifying module analyses the packets entirely using the deep inspection technology, if the packet is the data packet of the BT service, the obtained identification result may indicate the service type of the data packets is BT service, and the identification result is reported to the result receiving module of the CE by the result reporting module;

### The process of identifying the BT packets using the deep inspection technology is described as bellow:

Because the peer protocol starts with a handshaking, followed by a circular message stream in front of which is a number used for indicating the length of the message, so the packet identifying module may analyze the received data packets to determine whether there is a string "19BitTorrent Protocol" existing in the packet, if there is, it can be determined that this data packet is the data packet of BT service, and the obtained identification result will indicates the service type of the data packet is BT service, and an identification result indicating that the service type of the data packet is BT service is generated.

After the result receiving module of the CE receives the identification result, the strategy determining module finds that this identification result indicates the service type of the data packets, then the corresponding strategy may be determined according to the service type of the data packets, assuming that the routing strategy is as bellow:
For all of the P2P services, the CE may distribute a particular link of the data forwarding plane to the P2P service, the data packets of the P2P service are then transmitted only by these particular links within the network (that is to say, the routing forwarding information is determined), and the bandwidth of the other non-P2P services will not be occupied, insuring the normal operation of other services.

The strategy distributing module of the CE sends the determined routing strategy to the FE;

The strategy receiving module of the FE receives the routing strategy, and the data packets of the BT service are forwarded by the forwarding control module according to the routing strategy.

The above-mentioned strategy may also be another strategy, the embodiment of the present invention only focuses on the enacting of the routing strategy according to the information of the data packets identified by the packet identifying module, thereby satisfying requirements as many as possible, without being limited to any specific routing strategy.

### The second embodiment of the present invention:

The present different services have respective QoS requirements, if the routing strategy is not determined according to the its corresponding QoS requirement, the service requirement may be unable to be satisfied, leading to the decreasing of the degree of user satisfaction, in the present invention, the corresponding routing strategy may be configured according to the QoS of the service, the detailed description of the procedure is as bellow.

The CE presets a packet identification rule, for the case of the embodiment, the packet identification rule is to obtain the QoS field in the data packet;
The rule distributing module in the CE distributes the packet identification rule to the FE;
The rule receiving module of the FE receives and saves the packet identification rule, when receiving the data packets, the packet identifying module entirely analyses the packets using the deep inspection technology, obtains the information of the QoS field of the data packet, the corresponding identification result will indicate the QoS requirement of the data packet, the identification result will be reported to the result receiving module of the CE by the result reporting module;
After the result receiving module of the CE receives the identification result, the strategy determining module finds that the identification result indicates the QoS of the data packet, then the corresponding routing strategy may be determined according to the QoS of the data packet, assuming that the routing strategy is as bellow:
For the packets with the QoS requirement being greater than the first preset value, the CE may distribute the link with the best service quality among the links of the data forwarding plane that may serve the packet service to this packet, then the data packet may be transmitted within the network by these particular links (that is to say, the routing forwarding information is determined), insuring the QoS requirement.

The strategy distributing module of the CE sends the determined routing strategy to the FE;
The strategy receiving module of the FE receives the routing strategy, and the forwarding control module forwards the date packets according to the routing strategy.

The above-mentioned strategy may also be another strategy, the embodiment of the present invention only focuses on the enacting of the routing strategy according to the information of the data packets identified by the packet identifying module, thereby satisfying requirements as many as possible, without being limited to any specific routing strategy.

### The third embodiment of the present invention:

For the present different users, some users have higher priorities while some have lower priorities, thus they should be treated differently, if not be treated differently, a unfairness will be caused. In the present invention, the corresponding routing strategy may be configured for different users, the detailed description of the procedure is as bellow.

The CE presets a packet identification rule, for the case of the embodiment, the packet identification rule is to obtain the QoS field in the data packet;
The CE distributes the packet identification rule to the FE;
The rule distributing module in the CE distributes the packet identification rule to the FE;
The rule receiving module of the FE receives and saves the packet identification rule, when receiving the data packets, the packet identifying module entirely analyses the packets using the deep inspection technology, obtains the information of the user field of the data packet, the corresponding identification result will indicates the user information of the data packet, the identification result will be reported by the result reporting module;
After the result receiving module of the CE receives the identification result, the strategy determining module finds that the identification result indicates the user information of the data packet, then the corresponding routing strategy may be determined according to the user information of the data packet, assuming that the routing strategy is as bellow:
The quality of the link in the data forwarding plane distributed by the CE to the packet with a higher user priority is higher than that of the link distributed by CE to the packet with a lower user priority, then the data packet may be transmitted within the network by these particular links (that is to say, the routing forwarding information is determined), insuring that the user with a higher user priority could enjoy better services.

The strategy distributing module of the CE sends the determined routing strategy to the FE;
The strategy receiving module of the CE receives the routing strategy, and the forwarding control module forwards the data packets according the routing strategy.

The above-mentioned strategy may also be another strategy, the embodiment of the present invention only focuses on the enacting of the routing strategy according to the information of the data packet identified by the packet identifying module, thereby satisfying requirements as many as possible, without being limited to any specific routing strategy.

The above embodiments are illustrated by taking one attribute as an example (based on service type, based on QoS requirement, or based on the user), it should be understood that the packet identification rule related packet attributes may be the attributes in layers 2-7, such as the encryption attribute, when the encryption attribute meets certain conditions, a link with a higher security may be selected for forwarding, and the processing may even be implemented based on the date content.

It should be appreciated that the packet identification rule may also relates to multiple packet attributes, while the multiple massage attributes may be from different layers of the data packet, for example the packet attribute may be the source address, destination address, source port, destination port and protocol type, and so on.

The combinations of the above various situations will not be repeated herein.

The above description is only the preferred embodiment of the present invention, it is should be pointed out that several improvements and modifications may be made by those having ordinary skill in the art without departing from the principle of the present invention, all these improvements and modifications should be considered within the protection scope of present invention.

## Claims

1. A control element (21), comprising: a strategy enacting module (211), a strategy distributing module (212); wherein:
the strategy enacting module (211) is configured to enact a routing strategy according to an identification result from a forwarding element implementing a deep packet inspection for data packets according to an identification rule;
the strategy distributing module (212) is configured to distribute the routing strategy to the forwarding element, so that the forwarding element forwards the data packets according to the routing strategy,
wherein the control element (21) is configured to be included in an internet protocol, IP, network with separation of controlling and forwarding, and the control element (21) is a control device realized on the basis of iSCP, independent Scalable Control Plane, technology.

2. The control element (21) according to claim 1, wherein, the identification result comprises at least one of: user information, service information and data content information.

3. The control element (21) according to claim 1 or 2, wherein, the strategy enacting module (211) further comprises: a rule distributing module (2111), a result receiving module (2112), a strategy determining module (2113); wherein,
the rule distributing module (2111) is configured to distribute a packet identification rule to the forwarding element in an extent of jurisdiction of the rule distributing module (2111);
the result receiving module (2112) is configured to receive the identification result reported by the forwarding element;
the strategy determining module (2113) is configured to determine a routing strategy according the identification result, the routing strategy comprises routing forwarding information.

4. The control element (21) according to claim 3, wherein:
the identification result comprises information of layers 2-7 in an open system interconnection model.

5. A forwarding element (22), comprising: an identification processing module (221), a forwarding processing module (222); wherein,
the identification processing module (221) is configured to implement a deep packet inspection for data packets according to packet identification rule distributed by a control element (21), obtain an identification result and report the identification result to the control element (21);
the forwarding processing module (222) is configured to forward the data packets according a routing strategy from the control element (21) according to the identification result,
wherein the forwarding element (22) is configured to be included in an internet protocol, IP, network with separation of controlling and forwarding, and the control element (21) is a control device realized on the basis of iSCP, independent Scalable Control Plane, technology.

6. The forwarding element (22) according to claim 5, wherein, the identification result comprises at least one of: user information, service information and data content information.

7. The forwarding element (22) according to claim 6, wherein, the identification processing module (221) further comprises: a rule receiving module (2211), a packet identifying module (2212), a result reporting module (2213); wherein,
the rule receiving module (2211) is configured to receiving the packet identification rule distributed by the control element (21);
the packet identifying module (2212) is configured to implement the deep packet inspection for received data packets according to the packet identification rule, and obtain the identification result;
the result reporting module (2213) is configured to report the identification result to the control element.

8. The forwarding element (22) according to claim 6, wherein: the forwarding processing module (222) further comprises: a strategy receiving module (2221), a forwarding control module (2222); wherein,
the strategy receiving module (2221) is configured to receive the routing strategy determined and distributed by the control element (21) according to the identification result;
the forwarding control module (2222) is configured to forward the date packets according to the routing strategy.

9. A routing method for Internet protocol network, comprising:
a forwarding element implementing (31) a deep packet inspection for data packets according to a packet identification rule distributed by a control element to obtain an identification result, and reporting (31) the identification result to the control element;
the control element enacting (32) a routing strategy according to the identification result;
the control element distributing (33) the routing strategy to the forwarding element;
the forwarding element forwarding (34) the data packets according to the routing strategy,
wherein the Internet protocol network is an internet protocol, IP, network with separation of controlling and forwarding, and the control element is a control device realized on the basis of iSCP, independent Scalable Control Plane, technology.

10. The routing method according to claim 9, wherein, the identification result comprises at least one of: user information, service information and data content information.

## Patentansprüche

1. Steuerungselement (21), umassend: ein Strategieverordnungsmodul (211), ein Strategieverteilungsmodul (212); wobei
das Strategieverordnungsmodul (211) konfiguriert ist, um eine Routing-Strategie gemäß einem Identifizierungsergebnis von einem Weiterleitungselement zu verordnen, das eine Deep Packet Inspection für Datenpakete gemäß einer Identifizierungsregel ausführt;
das Strategieverteilungsmodul (212) konfiguriert ist, um die Routing-Strategie zu dem Weiterleitungselement zu verteilen, sodass das Weiterleitungselement die Datenpakete gemäß der Routing-Strategie weiterleitet,
wobei das Steuerungselement (21) konfiguriert ist, um in ein Internetprotokoll-, IP-Netzwerk mit Trennung von Steuerung und Weiterleitung eingeschlossen zu werden, und das Steuerungselement (21) eine Steuerungsvorrichtung ist, die basierend auf einer Independent Scalable Control Plane (unabhängigen skalierbaren Steuerungsebenen-), iSCP-Technologie realisiert wird.

2. Steuerungselement (21) nach Anspruch 1, wobei das Identifizierungsergebnis mindestens eines umfasst aus: Benutzerinformationen, Dienstinformationen und Dateninhaltsinformationen.

3. Steuerungselement (21) nach Anspruch 1 oder 2, wobei das Strategieverordnungsmodul (211) weiter umfasst: ein Regelverteilungsmodul (2111), ein Ergebnisempfangsmodul (2112), ein Strategiebestimmungsmodul (2113); wobei,
das Regelverteilungsmodul (2111) konfiguriert ist, um eine Paketidentifizierungsregel zu dem Weiterleitungselement in einem Ausmaß einer Zuständigkeit des Regelverteilungsmoduls (2111) zu verteilen;
das Ergebnisempfangsmodul (2112) konfiguriert ist, um das Identifizierungsergebnis zu empfangen, das durch das Weiterleitungselement gemeldet wird;
das Strategiebestimmungsmodul (2113) konfiguriert ist, um eine Routing-Strategie gemäß dem Identifizierungsergebnis zu bestimmen, wobei die Routing-Strategie Routing-Weiterleitungsinformationen umfasst.

4. Steuerungselement (21) nach Anspruch 3, wobei:
das Identifizierungsergebnis Informationen von Lagen 2-7 in einem offenen Systemverbindungsmodell umfasst.

5. Weiterleitungselement (22), umfassend: ein Identifizierungsverarbeitungsmodul (221), ein Weiterleitungsverarbeitungsmodul (222); wobei
das Identifizierungsverarbeitungsmodul (221) konfguriert ist, um eine Deep Packet Inspection für Datenpakete gemäß einer Paketidentifizierungsregel auszuführen, die durch ein Steuerungselement (21) verteilt wird, ein Identifizierungsergebnis zu erhalten und das Identifizierungsergebnis dem Steuerungselement (21) zu melden;
das Weiterleitungsverarbeitungsmodul (222) konfiguriert ist, um die Datenpakete gemäß einer Routing-Strategie von dem Steuerungselement (21) gemäß dem Identifizierungsergebnis weiterzuleiten,
wobei das Weiterleitungselement (22) konfiguriert ist, um in ein Internetprotokoll-, IP-Netzwerk mit Trennung von Steuerung und Weiterleitung eingeschlossen zu werden, und das Steuerungselement (21) eine Steuerungsvorrichtung ist, die basierend auf einer Independent Scalable Control Plane (unabhängigen skalierbaren Steuerungsebenen-), iSCP-Technologie realisiert wird.

6. Weiterleitungselement (22) nach Anspruch 5, wobei das Identifizierungsergebnis mindestens eines umfasst aus: Benutzerinformationen, Dienstinformationen und Dateninhaltsinformationen.

7. Weiterleitungselement (22) nach Anspruch 6, wobei das Identifizierungsverarbeitungsmodul (221) weiter umfasst: ein Regelempfangsmodul (2211), ein Paketidentifizierungsmodul (2212), ein Ergebnismeldemodul (2213); wobei
das Regelempfangsmodul (2211) konfiguriert ist, um die Paketidentifizierungsregel zu empfangen, die von dem Steuerungselement (21) verteilt wird;
das Paketidentifizierungsmodul (2212) konfiguriert ist, um die Deep Packet Inspection für empfangene Datenpakete gemäß der Paketidentifizierungsregel auszuführen, und das Identifizierungsergebnis zu erhalten;
das Ergebnismeldemodul (2213) konfiguriert ist, um das Identifizierungsergebnis dem Steuerungselement zu melden.

8. Weiterleitungselement (22) nach Anspruch 6, wobei: das Weiterleitungsverarbeitungsmodul (222) weiter umfasst: ein Strategieempfangsmodul (2221), ein Weiterleitungssteuerungsmodul (2222); wobei
das Strategieempfangsmodul (2221) konfiguriert ist, um die Routing-Strategie zu empfangen, die durch das Steuerungselement (21) gemäß dem Identifizierungsergebnis bestimmt und verteilt wird;
das Weiterleitungssteuerungsmodul (2222) konfiguriert ist, um die Datenpakete gemäß der Routing-Strategie weiterzuleiten.

9. Routing-Verfahren für ein Internetprotokoll-Netzwerk, umfassend:
Ausführen (31) einer Deep Packet Inspection für Datenpakete gemäß einer Paketidentifizierungsregel, die durch ein Steuerungselement verteilt wird, durch ein Weiterleitungselement, um ein Identifizierungsergebnis zu erhalten, und Melden (31) des Identifizierungsergebnisses dem Steuerungselement;
Verordnen (32) einer Routing-Strategie gemäß dem Identifizierungsergebnis durch das Steuerungselement;
Verteilen (33) der Routing-Strategie zu dem Weiterleitungselement durch das Steuerungselement;
Weiterleiten (34) der Datenpakete gemäß der Routing-Strategie durch das Weiterleitungselement,
wobei das Internetprotokoll-Netzwerk ein Internetprotokoll-, IP-Netzwerk mit Trennung von Steuerung und Weiterleitung ist und das Steuerungselement eine Steuerungsvorrichtung ist, die basierend auf einer Independent Scalable Control Plane (unabhängigen skalierbaren Steuerungsebenen-), iSCP-Technologie realisiert wird.

10. Routing-Verfahren nach Anspruch 9, wobei das Identifizierungsergebnis mindestens eines umfasst aus: Benutzerinformationen, Dienstinformationen und Dateninhaltsinformationen.

## Revendications

1. Élément de commande (21) comprenant : un module d'adoption de stratégie (211), un module de distribution de stratégie (212) ; dans lequel :
le module d'adoption de stratégie (211) est configuré pour adopter une stratégie de routage en fonction d'un résultat d'identification provenant d'un élément de transfert mettant en oeuvre une inspection approfondie des paquets pour des paquets de données en fonction d'une règle d'identification ;
le module de distribution de stratégie (212) est configuré pour distribuer la stratégie de routage à l'élément de transfert, de manière que l'élément de transfert transfère les paquets de données en fonction de la stratégie de routage,
dans lequel l'élément de commande (21) est configuré pour être inclus dans un réseau de protocole Internet, IP, avec séparation de commande et de transfert, et l'élément de commande (21) est un dispositif de commande réalisé sur la base de la technologie de plan de commande modulable indépendant, iSCP.

2. Élément de commande (21) selon la revendication 1, dans lequel le résultat d'identification comprend au moins une parmi : une information d'utilisateur, une information de service et une information de contenu de données.

3. Élément de commande (21) selon la revendication 1 ou 2, dans lequel le module d'adoption de stratégie (211) comprend en outre : un module de distribution de règle (2111), un module de réception de résultat (2112), un module de détermination de stratégie (2113) ; dans lequel
le module de distribution de règle (2111) est configuré pour distribuer une règle d'identification de paquets à l'élément de transfert dans un domaine de compétence du module de distribution de règle (2111) ;
le module de réception de résultat (2112) est configuré pour recevoir le résultat d'identification rapporté par l'élément de transfert ;
le module de détermination de stratégie (2113) est configuré pour déterminer une stratégie de routage en fonction du résultat d'identification, la stratégie de routage comprend des informations de transfert de routage.

4. Élément de commande (21) selon la revendication 3, dans lequel :
le résultat d'identification comprend des informations de couches 2-7 dans un modèle OSI.

5. Élément de transfert (22) comprenant : un module de traitement d'identification (221), un module de traitement de transfert (222) ; dans lequel :
le module de traitement d'identification (221) est configuré pour mettre en oeuvre une inspection approfondie des paquets pour des paquets de données en fonction d'une règle d'identification de paquets distribuée par un élément de commande (21), obtenir un résultat d'identification et rapporter le résultat d'identification à l'élément de commande (21) ;
le module de traitement de transfert (222) est configuré pour transférer les paquets de données en fonction d'une stratégie de routage provenant de l'élément de commande (21) en fonction du résultat d'identification,
dans lequel l'élément de transfert (22) est configuré pour être inclus dans un réseau de protocole Internet, IP, avec séparation de commande et de transfert, et l'élément de commande (21) est un dispositif de commande réalisé sur la base de la technologie de plan de commande modulable indépendant, iSCP.

6. Élément de transfert (22) selon la revendication 5, dans lequel le résultat d'identification comprend au moins une parmi : une information d'utilisateur, une information de service et une information de contenu de données.

7. Élément de transfert (22) selon la revendication 6, dans lequel le module de traitement d'identification (221) comprend en outre : un module de réception de règle (2211), un module d'identification de paquets (2212), un module de rapport de résultat (2213) ; dans lequel
le module de réception de règle (2211) est configuré pour recevoir la règle d'identification de paquets distribuée par l'élément de commande (21) ;
le module d'identification de paquets (2212) est configuré pour mettre en oeuvre l'inspection approfondie des paquets pour des paquets de données reçus en fonction de la règle d'identification de paquets et obtenir le résultat d'identification ;
le module de rapport de résultat (2213) est configuré pour rapporter le résultat d'identification à l'élément de commande.

8. Élément de transfert (22) selon la revendication 6, dans lequel : le module de traitement de transfert (222) comprend en outre : un module de réception de stratégie (2221), un module de commande de transfert (2222) ; dans lequel
le module de réception de stratégie (2221) est configuré pour recevoir la stratégie de routage déterminée et distribuée par l'élément de commande (21) en fonction du résultat d'identification ;
le module de commande de transfert (2222) est configuré pour transférer les paquets de données en fonction de la stratégie de routage.

9. Procédé de routage pour réseau de protocole Internet, comprenant :
la mise en oeuvre (31) par un élément de transfert d'une inspection approfondie des paquets pour des paquets de données en fonction d'une règle d'identification de paquets distribuée par un élément de commande pour obtenir un résultat d'identification et rapporter (31) le résultat d'identification à l'élément de commande ;
l'adoption (32) par l'élément de commande d'une stratégie de routage en fonction du résultat d'identification ;
la distribution (33) par l'élément de commande de la stratégie de routage à l'élément de transfert ;
le transfert par l'élément de transfert (34) des paquets de données en fonction de la stratégie de routage,
dans lequel le réseau de protocole Internet est un réseau de protocole Internet, IP, avec séparation de commande et de transfert, et l'élément de commande est un dispositif de commande réalisé sur la base de la technologie de plan de commande modulable indépendant, iSCP.

10. Procédé de routage selon la revendication 9, dans lequel le résultat d'identification comprend au moins une parmi : une information d'utilisateur, une information de service et une information de contenu de données.
